# EUROPÄISCHE PATENTANMELDUNG

(11) **EP 0 949 436 A2**
(43) Veröffentlichungstag der Anmeldung: **13.10.1999**
(21) Anmeldenummer: 99103759.9
(22) Anmeldetag: 26.02.1999
(51) Int. Cl.: F16J 9/26

(54) **Kolbenring für Brennkraftmaschinen**

(30) Priorität: 07.04.1998 DE 19815484
(71) Anmelder: Federal-Mogul Burscheid GmbH, 51399 Burscheid (DE)
(72) Erfinder: Löschner, Ralf, 42799 Leichlingen (DE)

(57) **Zusammenfassung**

Die Erfindung betrifft einen Kolbenring 1 sowie ein Verfahren zu seiner Herstellung. Der Kolbenring 1 besteht aus duktilem, plastisch verformbarem Werkstoff und weist Stirnflächen 2 auf, die durch einen Rolliervorgang geglättet sind, so daß eine Bautiefe R_{z} ≤ 2 µm erzeugt ist.

## Beschreibung

Die Erfindung betrifft einen Kolbenring sowie ein Verfahren zur Herstellung eines Kolbenringes für Brennkraftmaschinen, aus duktilem, plastisch verformbarem Werkstoff, insbesondere Eisen- oder Stahlwerkstoffen, dessen senkrecht zu seiner Achse verlaufende Stirnflächen (Flanken) eine mit Profilspitzen versehene Oberflächenrauhigkeit aufweisen.

Kolbenringe der verschiedensten Bauarten wie Kompressionskolbenringe oder Ölabstreifkolbenringe bestehen in der Regel aus Gußeisen oder aus Stahl. Um den Anforderungen von modernen Brennkraftmaschinen gerecht werden zu können, ist es bekannt, die Verschleißfestigkeit der äußeren Umfangsflächen (Laufflächen) oder der Stirnflächen (Flankenflächen) auf verschiedene Art und Weise zu erhöhen. Auf die Laufflächen der Ringe können unterschiedliche Materialien wie Chrom- oder Molybdänschichten aufgetragen sein. Darüber hinaus ist es bekannt, Kolbenringe auf der Umfangsfläche zu nitrieren, um so die Verschieißfestigkeit zu verbessern. So ist beispielsweise aus der DE 3245 689 C2 ein Verfahren zu entnehmen, bei dem ein Stapel von Kolbenringen allseitig nitriert wird. Das Nitrieren von Kolbenringen hat den Vorteil, daß sich die Abmessungen des nitrierten Kolbenringes nicht verändern, da ja im Gegensatz zum Beschichtungsverfahren kein zusätzliches Material aufgetragen wird.
Die Kolbenringe können so vor dem Nitrieren fertig bearbeitet werden.
Die Fertigbearbeitung von Kolbenringen ist ein Prozeß mit einer Vielzahl von Arbeitsschritten. Einer dieser Arbeitsschritte betrifft die Bearbeitung der Flankenflächen. Die Flanken werden mit Schleifscheiben feinstbearbeitet, um eine ausreichend glatte Oberfläche zu erzeugen. Die beim Schleifen erzielten Rauhigkeiten liegen üblicherweise im Bereich R_{z} > 2 µm. Je nach Bearbeitungswerkzeug entstehen beim Schleifen auf der Oberfläche mehr oder weniger tiefe, gerichtete Bearbeitungsriefen, mit aus der Oberfläche heraustretenden Profilspitzen, diese verursachen insbesondere in der Kolbennut starken Abrieb. Aus der DE 3903 722 C 2 ist dieses Problem offenbart und wird gemäß dieses Stands der Technik dadurch gelöst, daß die Kolbenringflächen mit einem Harz beschichtet sind.
Um die Kolbenringflanken vor unzulässig hohem Verschleiß zu schützen, ist gemäß der DE 19530 511 C1 vorgeschlagen worden, die Flanken mit einer Hartkohlenstoffschicht zu überziehen. Vor dem Aufbringen dieser Schicht, soll der Ring auf eine Rauhigkeit < 1 µm feinstbearbeitet werden. Wie die Feinstbearbeitung erfolgen soll, ist nicht dargelegt.

Der Erfindung liegt die Aufgabe zugrunde, das Betriebsverhalten von Kolbenringen im Hinblick auf Abdichtung und Verschleiß zu verbessern, ohne daß zusätzliche Materialschichten auf das Basismaterial aufgetragen werden.

Diese Aufgabe wird erfindungsgemäß durch die kennzeichnenden Merkmale des Patentanspruch 1 gelöst, vorteilhafte Ausgestaltungen der Erfindung sind in den Unteransprüchen dokumentiert.
Bei dem erfindungsgemäßen Kolbenring entsteht neben der Glättung der Flankenfläche eine erhebliche Materialverdichtung. Die aus einer spanabhebenden Vorbearbeitung vorhandenen Profilspitzen werden in die Riefen gewalzt. Daraus resultiert eine wesentliche Oberflächenverfestigung. Dieser Umformungsprozeß der Oberfläche erfolgt im µm - Bereich, so daß der Prozeß geeignet ist, als letzter Bearbeitungsschritt in der Herstellungskette eingesetzt werden zu können. Auf diese Weise ist eine gleichbleibende Qualität am Prozeßende auch bei der Bearbeitung in der Massenherstellung gewährleistet. In nur einem Arbeitsgang wird eine glatte Oberfläche und eine Härtung erzeugt. Der, nach dem erfindungsgemäßen Verfahren gebildete Kolbenring, zeichnet sich nicht nur durch ein verbessertes Betriebsverhalten aus, sondern reduziert auch die Fertigungskosten. Die beim Abrollen auf den Flanken der Kolbenringe verschleißende Rolle erzeugt auch nach längerer Betriebszeit eine gleichbleibende Oberflächenqualität am Kolbenring, so daß lange Werkzeugstandzeiten gegeben sind. Dadurch daß kein Materialabtrag am Kolbenring entsteht, fällt auch kein Abfall an, der teuer entsorgt werden müßte.

Der erfindungsgemäße Kolbenring sowie das Herstellungsverfahren sind anhand eines Ausführungsbeispiels in der Zeichnung dargestellt und werden im folgenden näher erläutert.

Es zeigen:
- Figur 1: Ansicht eines erfindungsgemäßen Kolbenringes während der Bearbeitung
- Figur 2: Ausschnittsvergrößerung gemäß Ansicht II der Fig. 1
- Figur 3: Ausschnittsvergrößerung gemäß Ansicht III der Fig. 1
- Figur 4: Ausschnittsvergrößerung des Wälzvorganges

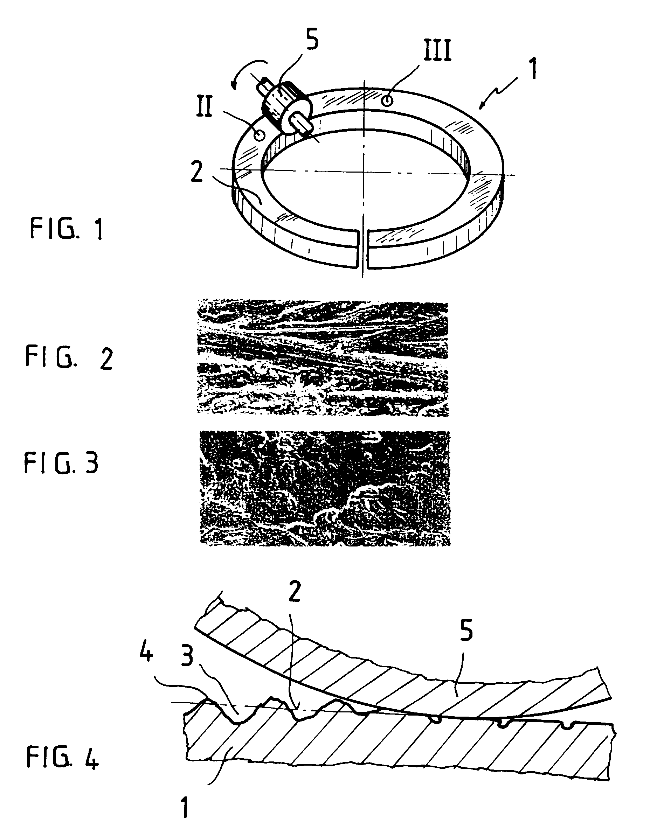

In der Figur 1 ist ein auf übliche Art und Weise hergestellter Kolbenring 1 für Brennkraftmaschinen in perspektivischer Ansicht dargestellt. In der Figur 2 ist eine vergrößerte Darstellung der auf der Stirnfläche 2 vorhandenen Oberflächenrauhigkeit vor, und in Fig. 3 nach dem Rolliervorgang dargestellt.
Durch eine schleifende Vorbearbeitung entstehen Riefen 3 mit Profilspitzen 4 (Fig. 4).

Die Profilspitzen werden mittels einer Rolle 5, die etwa die Breite der radialen Wandstärke des Kolbenrings 1 besitzt, kalt verformt. Es können gleichzeitig mehrere Rollen am Umfang angeordnet werden. Nachfolgend wird nur das Prinzip des Verfahrens anhand einer einzigen Rolle 5 beschrieben.
Die Rolle 5 wird mit einem, an den Werkstoff des Kolbenrings angepaßten definierten Druck auf die Stirnfläche 2 gepreßt. Mit definierter Geschwindigkeit wird die Rolle 5 über die Stirnfläche 2 des Kolbenrings 1 gewälzt, dabei ist es unerheblich, ob die Rolle oder der Kolbenring in Rotation versetzt werden. Beim Abrollen werden die Profilspitzen 4 in die Riefen 3 eingewalzt. Dieser Vorgang wird nur wenige Sekunden lang durchgeführt und erzeugt eine Härtesteigetung auf der Stirnflächenoberfläche bei gleichzeitig veringerter Rauhigkeit.
Auf diese Weise kann auf eine Beschichtung des Kolbenringes 1 im Bereich der Flanken verzichtet werden. Aufgrund der glatten Oberfläche dichtet der Ring in den korrespondierenden Nutflanken (nicht dargestellt) des zugehörigen Kolbens besser ab. Gleichzeitig ist der Nutverschleiß aufgrund der fehlenden Profilspitzen deutlich herabgesetzt.

## Patentansprüche

1. Kolbenring für Brennkraftmaschinen, aus duktilem, plastisch verformbarem Werkstoff, insbesondere Eisen- oder Stahlwerkstoffen, dessen senkrecht zu seiner Achse verlaufenden Stirnflächen (Flanken) eine mit Profilspitzen versehene Oberflächenrauhigkeit aufweisen, dadurch gekennzeichnet, daß die Profilspitzen (4) durch plastische Kaltverformung eingeebnet sind, derart, daß eine Oberflächenrauhigkeit mit einer Rauhtiefe R_{z} ≤ 2 µm und eine Randschichtverfestigung erzeugt ist.

2. Kolbenring nach Anspruch 1, dadurch gekennzeichnet, daß die Stirnflächen (2) durch ein Rollierverfahren geglättet sind.

3. Verfahren zur Herstellung eines Kolbenringes für Brennkraftmaschinen, aus duktilem, plastisch verformbarem Werkstoff, insbesondere Eisen- oder Stahlwerstoffen, dessen senkrecht zu seiner Achse verlaufende Stirnflächen eine mit Profilspitzen versehene Oberflächenrauhigkeit aufweisen nach den Ansprüchen 1 und 2, dadurch gekennzeichnet, daß die Stirnflächen (2) zunächst durch spanende Bearbeitung vorbearbeitet werden, derart, daß eine Oberflächenrauhigkeit mit einer Rautiefe R_{z} > 2 µm erzeugt wird, daß anschließend eine Rolle (5) mit definiertem Druck relativ auf die Stirnfläche (2) gepreßt und mit definierter Geschwindigkeit über die Stirnfläche gewälzt wird.

4. Verfahren nach den Ansprüchen 1 bis 3, dadurch gekennzeichnet, daß der Wälzvorgang in Umfangsrichtung der Stirnflächen (2) erfolgt und nur in einer Umfangsrichtung ausgeführt wird.

5. Verfahren nach den Ansprüchen 1 bis 4, dadurch gekennzeichnet, daß die Rollenbreite etwa der Breite der Stirnfläche (2) entspricht.

6. Verfahren nach den Ansprüchen 1 bis 5, dadurch gekennzeichnet, daß Druck und Geschwindigkeit des Wälzvorgangs so ausgelegt sind, daß die Fertigbearbeitung in etwa 2 bis 8 Sekunden erfolgt.
